# EUROPÄISCHE PATENTSCHRIFT

(11) **EP 0 897 331 B1**
(45) Veröffentlichungstag und Bekanntmachung des Hinweises auf die Patenterteilung: **06.02.2002**
(21) Anmeldenummer: 97915416.8
(22) Anmeldetag: 22.03.1997
(51) Int. Cl.: B32B 3/20, E04C 2/36

(54) **DOPPELPLATTENKÖRPER**
DOUBLE-WALLED BODY
ELEMENT A DOUBLE PAROI

(30) Priorität: 19.04.1996 DE 19615505
(43) Veröffentlichungstag der Anmeldung: 24.02.1999
(73) Patentinhaber: Blüco System 3R GmbH, 64521 Gross-Gerau (DE)
(72) Erfinder: HEISEL, Uwe, D-70192 Stuttgart (DE); GRINGEL, Martin, D-72379 Hechingen (DE)
(74) Vertreter: Grosse, Rainer, Dipl.-Ing.
(86) Internationale Anmeldenummer: EP9701467
(87) Internationale Veröffentlichungsnummer: WO9739887

(56) Entgegenhaltungen:
- BE-A- 630 464
- CH-A- 506 017
- DE-A- 4 429 779
- FR-A- 2 086 337
- US-A- 2 837 788
- US-A- 4 774 121

## Beschreibung

Die Erfindung betrifft einen Doppelplattenkörper mit Deckplatten, zwischen denen eine Anzahl Rohre angeordnet sind.

Doppelplattenkörper der hier angesprochenen Art können überall dort eingesetzt werden, wo Konstruktionen mit geringer Masse und einer hohen Steifigkeit gefordert sind, beispielsweise schnellbewegte Maschinentische. Bisherige Leichtbaukonstruktionen wurden in Sandwich-Bauweise hergestellt, deren Steifigkeit den Anforderungen jedoch nicht immer genügt. Weiterhin sind sehr zerspanungsintensive Integralbauweisen mit aufwendigen Guß- oder Schweißkonstruktionen bekannt, deren Herstellung aufwendig und kostenintensiv ist.

Aus der CH 5 06 017 geht ein Doppelplattenkörper hervor, der Deckplatten aufweist, zwischen denen eine Anzahl gleichlanger Kunststoffröhrchen angeordnet sind. Diese sind aneinanderliegend längs ihrer Mantellinien miteinander verklebt und an ihren Enden durch die Deckplatten verschlossen. Nachteilig sind die nur geringen Steifigkeitseigenschaften und die aufwendige Herstellung des Doppelplattenkörpers.

Es ist daher Aufgabe der Erfindung, einen Doppelplattenkörper zu schaffen, der hohe Steifigkeitseigenschaften aufweist und relativ einfach und kostengünstig herzustellen ist.

Zur Lösung dieser Aufgabe wird ein Doppelplattenkörper vorgeschlagen, der die in Anspruch 1 genannten Merkmale aufweist. Er zeichnet sich dadurch aus, daß die Rohre unterschiedliche Längen aufweisen, wobei als Abstandshalter dienende erste Rohre, deren Zylinderachsen orthogonal zu den Deckplattenoberflächen verlaufen, eine Länge aufweisen, die der lichten Weite zwischen den Deckplatten entspricht, daß die Länge von zweiten Rohren so gewählt ist, daß sie jeweils mit ihren Endbereichen in Durchbrüche der Deckplatten eingreifen oder diese durchgreifen, und daß das Innere von zumindest einigen der zweiten Rohre Befestigungsmittel, insbesondere Gewindebuchsen, aufnehmen. Die Aufgabe der ersten Rohre besteht darin, während des Zusammenbaus des Doppelplattenkörpers den Abstand zwischen den Deckplatten festzulegen. Dadurch wird auf einfache Weise realisiert, daß die Deckplattenoberflächen in einem gewünschten Abstand exakt parallel zueinander ausgerichtet sind. Die zweiten Rohre weisen eine größere Länge als die ersten Rohre auf, aufgrund dessen ihre stirnseitigen Endbereiche in die Durchbrüche der Deckplatten zumindest hineinreichen, vorzugsweise diese durchgreifen, so daß eine Verbindung der Deckplatten miteinander geschaffen ist. Der Zusammenbau der Deckplatten und der Rohre ist somit ohne weitere Hilfsmittel, beispielsweise Abstandshalter und Spannelemente, einfach und schnell durchführbar. Nach der Montage des Doppelplattenkörpers werden in die zweiten Rohre Befestigungsmittel eingebracht, die der Aufnahme von beispielsweise Spann- und/oder Halteelemente dienen. Durch die Doppelfunktion der zweiten Rohre, nämlich Verbinden der Deckplatten und Aufnahme von Befestigungsmitteln, entfallen weitere Bearbeitungsvorgänge, beispielsweise das Einbringen von Aufnahme- und/oder Gewindebohrungen in den Doppelplattenkörper, um Befestigungsmöglichkeiten für Baugruppen, beispielsweise einer Antriebseinheit, zu schaffen, wodurch die Herstellung des Doppelplattenkörpers einfach und kostengünstig möglich ist.

Bevorzugt wird eine Ausführungsform des Doppelplattenkörpers, bei der sich die Rohre mit ihren Mantelflächen aneinander abstützen. Die Rohre sind zwischen den Deckplatten so angeordnet, daß jedes Rohr zu mindestens einem weiteren Rohr benachbart ist. Es kann vorgesehen sein, daß die Anordnung der Rohre zueinander derart ist, daß ihre Mantelflächen sich berühren, wodurch erreicht wird, daß die Biege- und Torsionssteifigkeit des Doppelplattenkörpers zusätzlich erhöht ist.

Besonders bevorzugt wird eine Ausführungsform des Doppelplattenkörpers, die sich dadurch auszeichnet, daß die Endbereiche der Rohre mit der entsprechenden Deckplatte verbunden sind. Dadurch wird eine hohe Steifigkeit der gesamten Platten- und Rohrkonstruktion erreicht. Die Verbindung erfolgt mittels eines stoffschlüssigen Fügeverfahrens, wobei Schweißverbindungen aufgrund ihrer hohen Biege- und Torsionssteifigkeit sowie des optimalen Kraftflusses bevorzugt werden. Unterliegt der Doppelplattenkörper einer relativ geringen Belastung, so sind auch Löt- und/oder Klebverbindungen möglich. Als Schweißverfahren wird das Laserschweißen vorgeschlagen, da Laser durch ihre gebündelte Wärmeintensität nur einen kleinen Wirkbereich aufweisen, wodurch ein verzugs- und spannungsarmes Fügen realisiert ist. Durch den Einsatz von NC(Numerical Control)-gesteuerten Schweißrobotern, die mittels CAD/CAM(Computer Aided Design/Computer Aided Manufacturing)-Kopplung gesteuert werden können, ist es möglich, die Montage des Doppelplattenkörpers zu automatisieren, so daß die Herstellungskosten reduziert sind. Ferner ist es denkbar, daß zumindest in einigen Bereichen des Doppelplattenkörpers die Deckplatten und die Rohre kraftschlüssig miteinander verbunden sind, wodurch beispielsweise das Handling von vormontierten, das heißt noch nicht miteinaner verbundenen Deckplatten und Rohren verbessert wird.

Weiterhin wird eine Ausführungsform des Doppelplattenkörpers bevorzugt, bei der die Rohre von Stangenmaterial durch ein Trennverfahren, insbesondere Laserschneiden, abgelängt und ohne weitere Bearbeitung zur Erstellung des Doppelplattenkörpers eingesetzt werden. Durch die saubere und exakte, das heißt ebene Schnittfläche der durch einen Laser getrennten Rohre, ist eine weitere Bearbeitung, beispielsweise entgraten, nicht notwendig, so daß die Rohre direkt montiert werden können. Es ist möglich, auch hier NC(Numerical Control)-gesteuerte Schneidmaschinen einzusetzen, um die Kosten zu senken. Unter dem Begriff "Trennverfahren" sind auch spanende Verfahrenstechniken, beispielsweise Einbeziehungsweise Abstechen des Stangenmaterials mittels eines geeigneten Stechdrehmeißels in einer Drehmaschine zu verstehen.

Bevorzugt wird auch eine Ausführungsform des Doppelplattenkörpers, die sich dadurch auszeichnet, daß die Rohre jeweils an ihren Enden ebene Stirnflächen aufweisen, die orthogonal zu den Zylinderachsen, insbesondere Rohrachsen, verlaufen. Dadurch wird sichergestellt, daß die Deckplattenoberflächen satt auf den Stirnflächen der ersten Rohre aufsitzen und daß das Abstandsmaß zwischen den Deckplatten an jeder Stelle innerhalb eines engen Toleranzbereiches konstant ist.

Besonders bevorzugt wird eine Ausführungsform des Doppelplattenkörpers, die sich dadurch auszeichnet, daß die Befestigungsmittel in den zweiten Rohren mittels Kunststoffüllungen gehalten sind. Es ist möglich, den verbleibenden Ringraum zwischen Innenmantelfläche der Rohre und der Außenfläche der Befestigungsmittel mit einer geeigneten, sich verhärtenden Masse auszuschäumen beziehungsweise auszugießen. Dadurch ist eine schnelle und kostengünstige Lagefixierung der Befestigungsmittel an dem Doppelplattenkörper realisiert.

Bevorzugt wird auch eine Ausführungsform des Doppelplattenkörpers, bei der die Bohrung der zweiten Rohre ein Gewinde aufweist und/oder als Passung, vorzugsweise Preßpassung, ausgebildet ist, in die dementsprechend ausgebildete Befestigungsmittel eingeschraubt beziehungsweise eingesteckt werden können. Das Gewinde als auch die Passung kann vor Montage des Doppelplattenkörpers, beispielsweise vor dem Ablängen vom Stangenmaterial, gefertigt werden. Dadurch entfällt ein nochmaliges Spannen der Rohre beziehungsweise des Doppelplattenkörpers, wodurch die Fertigungszeiten herabgesetzt sind.

Weiterhin wird eine Ausführungsform des Doppelplattenkörpers bevorzugt, bei der die Rohre als Vieleckrohre ausgebildet sind. Durch die ebenen Flächen an der Ummantelung der Rohre werden, da sich die Rohre bei einer Biege- und/oder Torsionsbeanspruchung aneinander abstützen, die bei Belastung auf die Rohre einwirkenden Kräfte verteilt, wodurch die Flächenpressung vermindert ist. Dadurch können Rohre mit relativ dünnen Wandungen eingesetzt werden, wodurch das Gesamtgewicht des Doppelplattenkörpers vermindert ist.

Schließlich wird auch eine Ausführungsform des Doppelplattenkörpers bevorzugt, bei der der Raum zwischen den beiden Deckplatten eine Kunststoffausschäumung aufweist. Durch dieses quasi Einbetten der Rohre in eine Füllung werden lärmverursachende und störende Vibrationen, die beispielsweise von den ersten Rohren verursacht werden können, und das Eindringen von Verschmutzungen verhindert. Weiterhin wird die Biege- und Torsionssteifigkeit der Doppelplattenkörperkonstruktion erhöht.

Die Erfindung wird im folgenden anhand der Zeichnung näher erläutert. Es zeigen:
- Figur 1: eine perspektivische Ansicht eines ersten Ausführungsbeispiels eines Doppelplattenkörpers,
- Figur 2: eine perspektivische Ansicht des Doppelplattenkörpers gemäß Figur 1, wobei eine Deckplatte und einige Rohre entfernt sind,
- Figur 3: einen schematische Draufsicht auf das Ausführungsbeispiel des Doppelplattenkörpers gemäß Figur 1 und
- Figur 4: eine Seitenansicht im Schnitt des Doppelplattenkörpers entlang der Schnittlinie A-A.

Der im folgenden beschriebene Doppelplattenkörper kann allgemein überall dort eingesetzt werden, wo Bauelemente mit geringer Masse und einer hohen Steifigkeit, insbesondere Biege- und Torsionssteifigkeit, gefordert sind. Bevorzugt finden derartige Konstruktionen als Maschinentische in Hochgeschwindigkeitsmaschinen Anwendung. Ein weiterer Einsatzbereich ist im Fahrzeug- und Flugzeugbau, da dort eine Leichtbauweise angestrebt wird, um den Energieverbrauch der eingesetzten Antriebsaggregate gering zu halten.

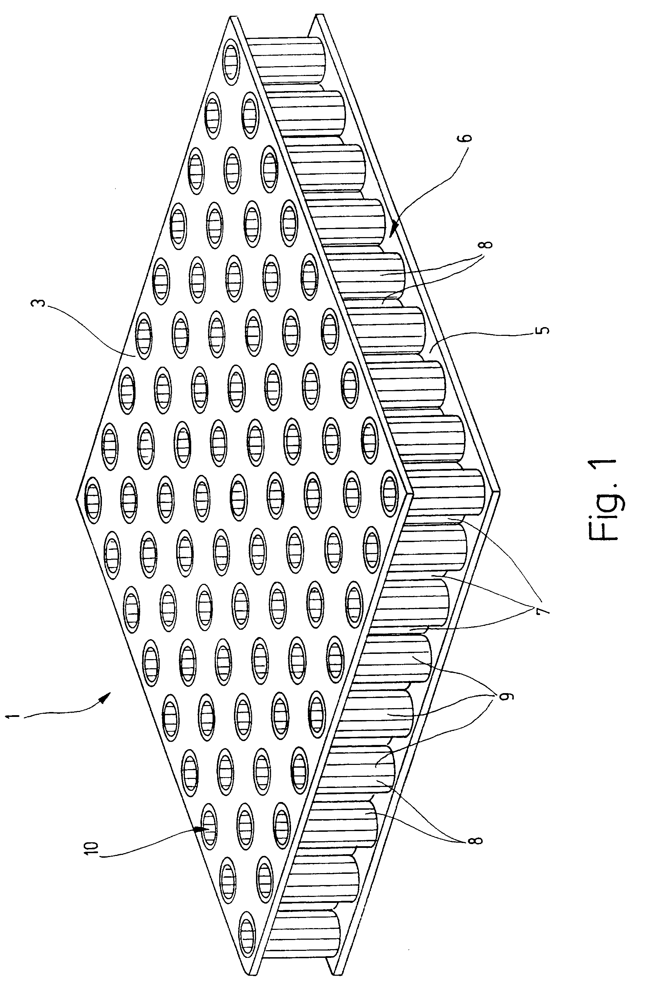

Figur 1 zeigt einen Doppelplattenkörper 1, mit einer oberen Deckplatte 3 und einer unteren Deckplatte 5. Zwischen den Deckplatten 3, 5 sind Rohre 6 mit unterschiedlicher Länge angeordnet. So weist ein erster Teil der Rohre, im folgenden erste Rohre 7 genannt, eine kürzere Länge als ein zweiter Teil der Rohre, im folgenden kurz zweite Rohre 9 genannt, auf. Der Außenmantel 8 der Rohre 6 ist -im Querschnitt betrachtet- als regelmäßiges Vieleck und die durchgängige Bohrung 10 kreisförmig ausgebildet. Die sich so am Umfang des Außenmantels 8 über die Länge der Rohre erstreckenden Flächen dienen als Anlage für benachbart angeordnete Rohre. Es ist möglich, die geometrische Querschnittsform des Außenmantels 8 und der Bohrung 10 zu variieren, so daß beispielsweise die Bohrung 10 einen rechteckigen und der Außenmantel 8 einen kurvenförmigen Querschnitt aufweist.

In Abhängigkeit der geforderten Materialeigenschaften können die Rohre 6 und die Deckplatten 3 und 5 aus Metall, Kunststoff oder dergleichen hergestellt sein. Im folgenden wird davon ausgegangen, daß die Rohre 6 und die Deckplatten 3 und 5 aus schweißbaren Metall bestehen.

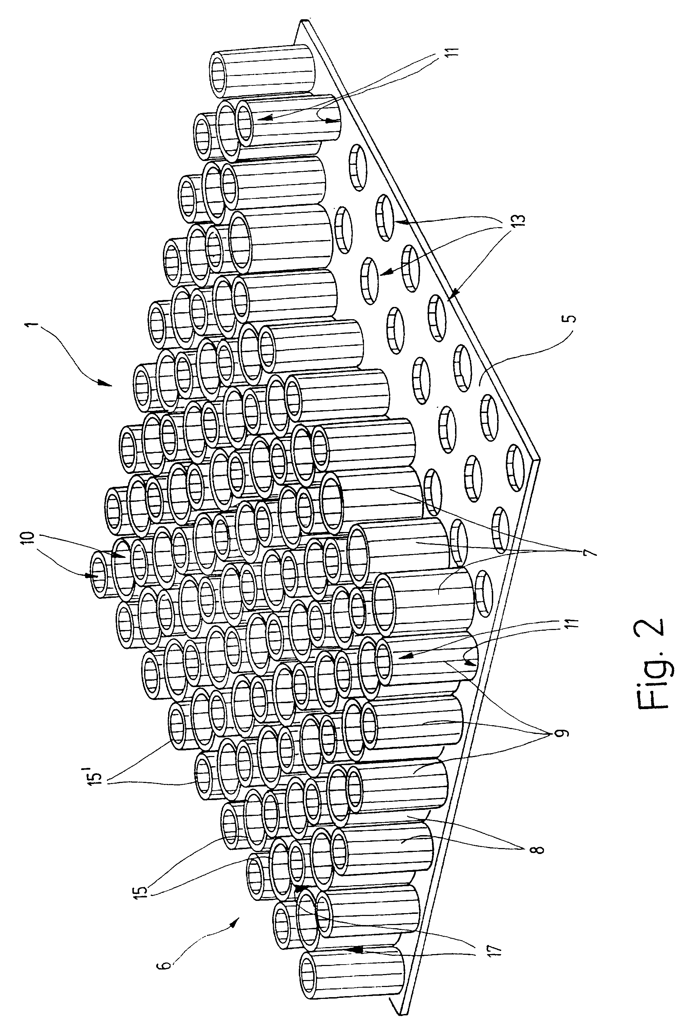

Figur 2 zeigt Teile des Doppelplattenkörpers 1, nämlich die untere Deckplatte 5 und eine Anzahl der ersten und zweiten Rohre. In der unteren Deckplatte 5 sowie in der hier nicht dargestellten oberen Deckplatte 3 sind Durchbrüche 13 eingebracht, deren Kontur und Größe im wesentlichen dem Außenmaß und der -kontur der zweiten Rohre 9 entspricht. Wichtig ist, daß der Innendurchmesser der Durchbrüche 13 in den Deckplatten 3, 5 größer als der Außendurchmesser der zweiten Rohre 9 ist, damit die Endbereiche 11 der zweiten Rohre 9 in die Druchbrüche 13 ein- und gegebenfalls durch diese hindurchgreifen können. Vorzugweise weisen die Durchbrüche 13 und die Rohre 6 dieselbe Querschnittsform beziehungsweise Kontur auf.

Die Durchbrüche 13 können mittels eines Lasers in die Deckplatten 3, 5 eingeschnitten oder durch ein anderes Trennverfahren, beispielsweise dem Stanzen, eingebracht werden. Die zweiten Rohre 9 greifen mit ihren Endbereichen 11 in die Durchbrüche 13 der Deckplatten 3, 5 ein. Die ersten Rohre 7 liegen mit ihrer Stirnfläche 15 auf der unteren Deckplatte 5 an. Die Stirnflächen 15 verlaufen rechtwinklig zu den Rohrachsen, so daß die Deckplattenoberflächen eben auf den Stirnflächen aufliegen. Die Rohre 6 stehen auf der unteren, in diesem Ausführungsbeispiel rechteckigen Deckplatte 5 so aneinander, daß sich in dem Verbindungsbereich zwischen zwei Rohren ein Zwickel 17 ausbildet. Weiterhin sind die Rohre 6 derart zueinander ausgerichtet, daß sie im flächigen Kontakt zueinander stehen. Dadurch wird ein gleichmäßiger Kraftfluss jeweils im Verbindungsbereich zwischen zwei Rohren sichergestellt. Durch diese Anordnung und Ausrichtung der Rohre ist eine dichtbepackte Deckplattenoberfläche realisiert, wobei jedes der ersten Rohre 7 zwischen vier zweiten Rohren 9 angeordnet beziehungsweise von diesen gehalten ist, so daß eine parallel zu den Deckplattenoberflächen gerichtete Relativbewegung der ersten Rohre 7 nicht möglich ist. Die so fixierten ersten Rohre 7 weisen eine exakt definierte Position bezüglich den Oberflächen der beiden Deckplatten 3 und 5 auf, wodurch ein stoffschlüssiges Verbinden der Stirnflächen 15 der relativ dünnwandigen ersten Rohre 7 mit den Deckplatten 3, 5 mittels eines Lasers, aufgrund seines kleinen Wirkbereichs, realisierbar ist.

Im folgenden wird rein beispielhaft die Montage eines Doppelplattenkörpers beschrieben:

Die untere Deckplatte 5 wird auf eine ebene Unterlage gelegt. Dann werden die zweiten Rohre 9 mit dem Endbereich 11 in die Durchbrüche 13 der Deckplatte 5 eingesteckt. In den verbleibenden Zwischenräumen werden die ersten Rohre 7 angeordnet. Schließlich wird die obere Deckplatte 3 von oben auf die Rohre 7, 9 aufgebracht. Dabei tritt der Endbereich 11 der zweiten Rohre 9 in die Durchbrüche 13 ein. Dadurch senkt sich die obere Deckplatte 3 soweit ab, bis ihre Oberfläche auf den Stirnflächen 15 der ersten Rohre 7 aufliegt. Die Rohre 7 und 9 werden nun mit der oberen Deckplatte 3 mittels eines Lasers verschweißt. Die Schweißung der ersten Rohre 7 erfolgt dadurch, daß ein auf die Deckplatte wirkender Laserstrahl -durch diese hindurch- die Stirnfläche 15 der ersten Rohre 7 aufschmelzt und somit mit der Deckplatte stoffschlüssig verbindet. Es ist möglich, die Rohre und die Deckplatten mittels einer Löt- oder Klebverbindung zu verbinden, wobei die Art der stoffschlüssigen Verbindung vorzugsweise in Abhängigkeit der Rohr- und Deckplattenmaterialien und/oder den Anforderungen an die Belastbarkeit des Doppelplattenkörpers wählbar ist. Anschließend wird die untere Deckplatte 3 auf die gleiche Art und Weise mit den Rohren 7 und 9 verbunden. In die Bohrung 10 der zweiten Rohre 9 werden Befestigungsmittel, beispielsweise Spannmittelaufnahmen, eingebracht und mittels einer sich verhärtenden Masse in der Bohrung 10 gehalten. Der Raum zwischen den Deckplatten 3 und 5 kann gegebenenfalls mit einem Kunststoff ausgeschäumt werden, wodurch das Eindringen von Verschmutzungen verhindert und die Steifigkeit des Doppelplattenkörpers erhöht wird.

Die für die Bohrung 10 vorgesehenen Befestigungsmittel können auch mittels einer lösbaren Verbindung, beispielsweise einem Gewinde oder einer Passung, in der Bohrung 10 gehalten werden. Die Vorbereitungsarbeiten in der Bohrung, also Gewindeschneiden beziehungsweise Erstellen einer Passung, sind vor der Montage des Doppelplattenkörpers möglich, sofern die Anforderungen an die Torelanzbereiche gering sind, das heißt diese relativ groß sein können. Große Toleranzbereiche deshalb, weil durch das thermische Fügen des Doppelplattenkörpers ein Verzug der einzelnen Teile (Rohre, Deckplatten) möglich ist. Beim Einsatz des Doppelplattenkörpers in Bereichen, in denen sehr kleine Toleranzbereiche und eine hohe Bauteilpräzision gefordert ist, kann die Bohrung 10 der zweiten Rohre 9 auch nach der Montage des Doppelplattenkörpers zur Aufnahme der Befestigungsmittel bearbeitet werden. Zu diesem Zweck weist die Bohrung 10 der zweiten Rohre 9 ein Aufmaß auf, damit auch nach der Präzisionsbearbeitung der Bohrung 10 eine ausreichende Wandstärke der Rohre 9 gewährleistet ist.

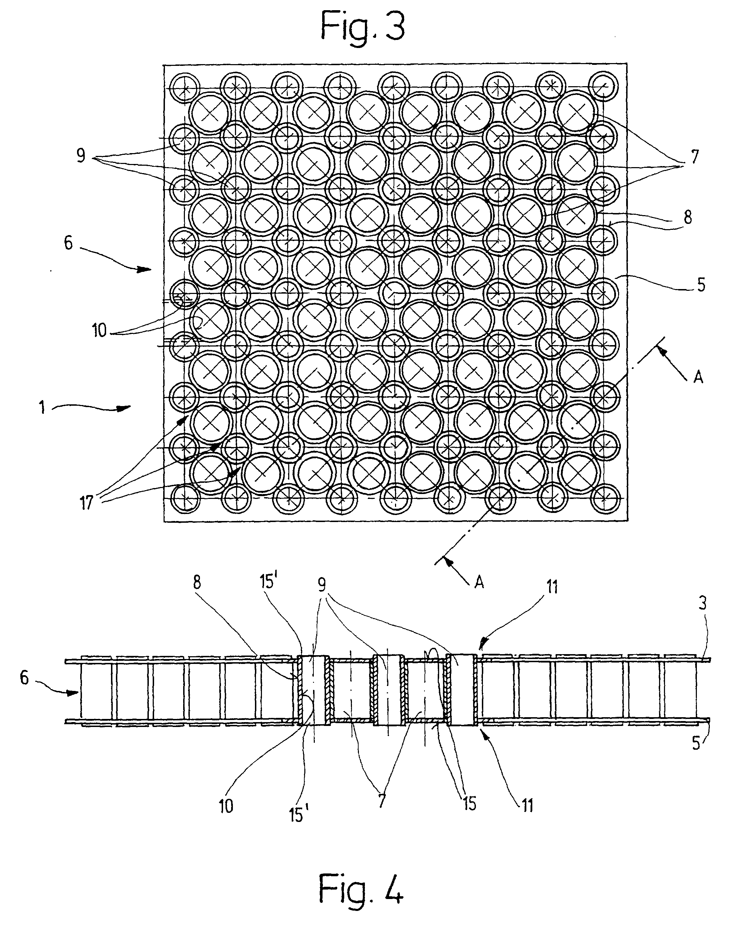

Figur 3 zeigt eine Draufsicht auf den Doppelplattenkörper 1 mit entfernter Deckplatte 3. Gleiche Teile sind mit gleichen Bezugsziffern versehen, so daß zu deren Beschreibung zu Figur 1 und 2 verwiesen wird. Es ist ersichtlich, daß die Rohre 6 einander berühren, wodurch diese sich gegenseitig unmittelbar abstützen und somit die Steifigkeit und die Dämpfung des Doppelplattenkörpers erhöhen. Die Wandung der zweiten Rohre 9 ist hier dicker als die Wandung der ersten Rohre 7, da die Bohrungen 10 ein Bearbeitungsaufmaß für nachfolgende Bearbeitungsschritte aufweisen. Weiterhin weisen die ersten Rohre 7 einen größeren Außendurchmesser als die zweiten Rohre 9 auf. Die Durchmesser der Rohre 7, 9 und die Wandungsstärken sind variabel und können beispielsweise in Abhängigkeit von geforderten Festigkeitseigenschaften des Doppelplattenkörpers gewählt beziehungsweise aufeinander abgestimmt werden.

Figur 4 zeigt eine Schnittansicht des Doppelplattenkörpers 1 entlang der in Figur 3 eingezeichneten Schnittlinie A-A, wobei hier die obere Deckplatte 3 aufgesetzt ist. Die Oberflächen der Deckplatten 3 und 5 liegen vollständig auf den Stirnflächen 15 der ersten Rohre 7 auf, so daß die Oberflächen der Deckplatten 3, 5 parallel zueinander verlaufen.

Der Doppelplattenkörper 1 weist durch die kompakte Anordnung der Rohre 7, 9 und deren homogene Verbindung mit den Deckplatten 3, 5 eine hohe Biege- und Torsionssteifigkeit auf. Die Fertigung eines derartigen Doppelplattenkörpers in Leichtbauweise ist durch den einfachen Aufbau und die sehr leicht erstellbaren Geometrien beziehungsweise Schnittkanten kostengünstig herstellbar. Dies auch deshalb, weil alle Bearbeitungsschritte durch den Einsatz von NC(Numerical Control)-Maschinen durchführbar sind und somit eine Automatisierung der Fertigung möglich ist.

## Patentansprüche

1. Doppelplattenkörper (1) mit Deckplatten (3,5), zwischen denen eine Anzahl Rohre (6) angeordnet sind, **dadurch gekennzeichnet, daß** die Rohre (6) unterschiedliche Längen aufweisen, wobei als Abstandshalter dienende erste Rohre (7), deren Zylinderachsen orthogonal zu den Deckplattenoberflächen verlaufen, eine Länge aufweisen, die der lichten Weite zwischen den Deckplatten (3,5) entspricht, daß die Länge von zweiten Rohren (9) so gewählt ist, daß sie jeweils mit ihren Endbereichen (11) in Durchbrüche (13) der Deckplatten (3,5) eingreifen oder diese durchgreifen, und daß das Innere von zumindest einigen der zweiten Rohre (9) Befestigungsmittel, insbesondere Gewindebuchsen, aufnehmen.

2. Doppelplattenkörper nach Anspruch 1, **dadurch gekennzeichnet, daß** sich die Rohre (7,9) mit ihren Mantelflächen aneinander abstützen.

3. Doppelplattenkörper nach einem der vorhergehenden Ansprüche, **dadurch gekennzeichnet, daß** die Endbereiche (11) der Rohre (7,9) mit der entsprechenden Deckplatte (3,5) verbunden sind.

4. Doppelplattenkörper nach Anspruch 3, **dadurch gekennzeichnet, daß** die Rohre (7,9) mit den Deckplatten (3,5) stoffschlüssig, vorzugsweise mittels thermischen Fügens verbunden sind.

5. Doppelplattenkörper nach einem der vorhergehenden Ansprüche, **dadurch gekennzeichnet, daß** die Rohre (7,9) von Stangenmaterial durch ein Trennverfahren, insbesondere Laserschneiden, abgelängt und ohne weitere Bearbeitung zur Erstellung des Doppelplattenkörpers (1) eingesetzt werden.

6. Doppelplattenkörper nach einem der vorhergehenden Ansprüche, **dadurch gekennzeichnet, daß** die Rohre (7,9) jeweils an ihren Enden ebene Stirnflächen (15) aufweisen, die orthogonal zu den Zylinderachsen, insbesondere Rohrachsen, verlaufen.

7. Doppelplattenkörper nach einem der vorhergehenden Ansprüche, **dadurch gekennzeichnet, daß** die Befestigungsmittel in den zweiten Rohren (9) mittels Kunststoffüllungen gehalten sind.

8. Doppelplattenkörper nach einem der vorhergehenden Ansprüche, **dadurch gekennzeichnet, daß** in der Bohrung (10) der zweiten Rohre (9) ein Gewinde eingebracht und/oder daß die Bohrung (10) als Passung ausgebildet ist, mittels derer die Befestigungsmittel am Doppelplattenkörper (1) ausgerichtet und/oder fixiert werden.

9. Doppelplattenkörper nach einem der vorhergehenden Ansprüche, **dadurch gekennzeichnet, daß** die Rohre (7,9) als Vieleckrohre ausgebildet sind.

10. Doppelplattenkörper nach einem der vorhergehenden Ansprüche, **dadurch gekennzeichnet, daß** der Raum zwischen den beiden Deckplatten (3,5) eine Kunststoffausschäumung aufweist.

## Claims

1. Double-walled body (1) with cover panels (3, 5) between which a number of tubes (6) are arranged, **characterised in that** the tubes (6) are of differing lengths, wherein first tubes (7), serving as spacers and the cylinder axes of which run orthogonally with respect to the cover panel surfaces, are of a length which corresponds to the clear width between the cover panels (3, 5), **in that** the length of second tubes (9) is so selected that they respectively engage via their end regions (11) in or through apertures (13) in the cover panels (3, 5), and **in that** the interior of at least some of the second tubes (9) accommodates fastening means, in particular threaded bushes.

2. Double-walled body according to claim 1, **characterised in that** the tubes (7, 9) are supported against one another by means of their exterior lateral surfaces.

3. Double-walled body according to one of the preceding claims, **characterised in that** the end regions (11) of the tubes (7, 9) are connected to the corresponding cover panel (3, 5) .

4. Double-walled body according to claim 3, **characterised in that** the tubes (7, 9) are connected to the cover panels (3, 5) through an integral joint, preferably by means of thermal joining.

5. Double-walled body according to one of the preceding claims, **characterised in that** the tubes (7, 9) are cut to length from bar stock by a cutting method, in particular laser cutting, and are used to construct the double-walled body (1) without further machining.

6. Double-walled body according to one of the preceding claims, **characterised in that** the tubes (7, 9) each have at their ends planar end faces (15) which run orthogonally with respect to the cylinder axes, in particular tube axes.

7. Double-walled body according to one of the preceding claims, **characterised in that** the fastening means are held in the second tubes (9) by means of plastic material fillings.

8. Double-walled body according to one of the preceding claims, **characterised in that** a thread is introduced in the bore (10) of the second tubes (9) and/or **in that** the bore (10) is configured as a seat by means of which the fastening means are aligned and/or fixed on the double-walled body (1).

9. Double-walled body according to one of the preceding claims, **characterised in that** the tubes (7, 9) are configured as polygonal tubes.

10. Double-walled body according to one of the preceding claims, **characterised in that** the space between the two cover panels (3, 5) has a foamed plastics filling.

## Revendications

1. Elément à double plaque (1) comportant des plaques de recouvrement (3, 5) entre lesquelles se trouvent un certain nombre de tubes (6),
**caractérisé en ce que**
les tubes (6) ont des longueurs différentes, les premiers tubes (7) servant d'écarteurs et dont l'axe de cylindre est perpendiculaire à la surface des plaques de recouvrement, ont une longueur correspondant à l'intervalle libre entre les plaques de recouvrement (3, 5),
la longueur des seconds tubes (9) est choisie pour qu'ils pénètrent chaque fois avec leurs zones d'extrémité (11) dans des passages (13) des plaques de recouvrement (3, 5) ou viennent derrière celles-ci, et
au moins certains des seconds tubes (9) reçoivent intérieurement des moyens de fixation notamment des douilles filetées.

2. Elément à double plaque selon la revendication 1,
**caractérisé en ce que**
les tubes (7, 9) s'appuient les uns contre les autres par leur surface enveloppe.

3. Elément à double plaque selon l'une quelconque des revendications précédentes,
**caractérisé en ce que**
les zones d'extrémité (11) des tubes (7, 9) sont reliées à la plaque de recouvrement (3, 5) correspondante.

4. Elément à double plaque selon la revendication 3,
**caractérisé en ce que**
les tubes (7, 9) sont reliés aux plaques de recouvrement (3, 5) par une liaison par la matière, de préférence par un assemblage thermique.

5. Elément à double plaque selon l'une quelconque des revendications précédentes,
**caractérisé en ce que**
les tubes (7, 9) sont coupés à partir de barres par un procédé de découpe notamment de découpe au laser et ils sont mis en place sans autre usinage pour réaliser l'élément à double plaque (1).

6. Elément à double plaque selon l'une quelconque des revendications précédentes,
**caractérisé en ce que**
les tubes (7, 9) ont au niveau de leurs extrémités, des surfaces frontales planes (15) perpendiculaires à l'axe des cylindres notamment l'axe des tubes.

7. Elément à double plaque selon l'une quelconque des revendications précédentes,
**caractérisé en ce que**
les moyens de fixation sont tenus dans les seconds tubes (9) à d'aide de moyens de remplissage en matière plastique.

8. Elément à double plaque selon l'une quelconque des revendications précédentes,
**caractérisé en ce que**
dans le perçage (10) des seconds tubes (9) on a un filetage et/ou le perçage (10) est un ajustement à l'aide duquel on aligne et/ou on bloque les moyens de fixation dans l'élément à double plaque (1).

9. Elément à double plaque selon l'une quelconque des revendications précédentes,
**caractérisé en ce que**
les tubes (7, 9) sont des tubes à section polygonale.

10. Elément à double plaque selon l'une quelconque des revendications précédentes,
**caractérisé en ce que**
l'espace entre les deux plaques de recouvrement (3, 5) comporte de la mousse expansée.
